# EUROPEAN PATENT SPECIFICATION

(11) **EP 1 232 907 B1**
(45) Date of publication and mention of the grant of the patent: **30.07.2008**
(21) Application number: 02075667.2
(22) Date of filing: 19.02.2002
(51) Int. Cl.: B60P 3/34

(54) **Camping device**
Campingeinrichtung
Dispositif de camping

(30) Priority: 19.02.2001 NL 1017394
(43) Date of publication of application: 21.08.2002
(73) Proprietor: Holtkamp, Egbert Berend, 9561 JA Ter Apel (NL)
(72) Inventor: Holtkamp, Egbert Berend, 9561 JA Ter Apel (NL)
(74) Representative: Prins, Adrianus Willem

(56) References cited:
- DE-A- 2 709 378
- FR-A- 2 409 883
- GB-A- 1 603 334
- US-A- 1 712 836
- US-A- 3 115 362
- US-A- 3 403 935
- US-A- 4 867 502
- US-B1- 6 179 368

## Description

The invention refers to a camping device for use in combination with a car, the device comprising a foldable construction connected to a carrier. A device of that kind is known from US 6 179 368 A..

Apart from towing a trailer, such as, for instance, a caravan or a folding trailer, the towing hook of a car, such as for instance a passenger car or a delivery van, can also be used for mounting thereon a carrier for, for instance, bicycles. Further, for various types of cars, an extension luggage carrier is available, comprising an adapter for fixed attachment to the rear side of the vehicle and an easily removable carrier, which can be fitted onto the adapter. Such extension luggage carriers are put on the market by, for instance, Cate-Automobilzubehör.

The invention is based on the idea that the carrier function of a conventional towing hook or extension luggage carrier can be used for mounting a foldable construction which, during driving, is folded into a package of limited dimensions and can be unfolded to from a camping accommodation at a camping location.

According to the invention, a camping device is provided for use in combination with a car said camping device comprising a carrier which can be mounted on a towing hook of the car or on an extension luggage carrier mounted to the car, wherein said carrier is provided with a foldable construction connected to the carrier said foldable construction being foldable into a package of limited dimensions during driving, and wherein said foldable construction in unfolded condition, in cooperation with at least one wall of the car, is able to form a camping accommodation, wherein a door or flap situated in said wall of the car can be in open position, such that the interior of the car is in open communication with the camping accommodation.

It is noted that foldable camping accommodations, carried along in or on a car are known per se. For instance, from the German Offenlegungsschrift 27 09 378, a camping accommodation is known comprising a box-shaped holder resting on the roof of a car, which, through vertical arms, rests on a pivotable coupling device mounted at the rear of the car. The box-shaped holder can be swiveled backwards and then rests on a bottom support and the towing hook. Subsequently, the box-shaped holder can be unfolded to form an independent camping accommodation. However, this camping accommodation does not connect to the rear wall of the car.

From the British patent 1603 334 and the US patent 4 867 502, tent constructions are known which can be arranged on the rear of a car in a manner such, that a camping accommodation is formed which is in communication with the interior of the car via a rear door or tailgate. However, these tent constructions are not arranged to be carried along in folded condition, mounted on the towing hook or an extension luggage carrier.

From the US patent 6 179 368, a foldable camping accommodation is known which can be carried along on an extension tube of a towing hook. However, this known camping device is not arranged so as to connect to the rear wall of the car. From the US patent 1 712 836, a foldable camping accommodation is known which, in folded condition, is present in a box mounted on supports on the rear side of the car. However, the unfolded camping accommodation does not connect to the body work of the car and is not in connection with the interior of the car.

FR 2409883 A discloses a camping device which in its operative condition has an interior camping space in communication with the interior of a car. This camping device has a bottom plate resting on the bottom of the trunk area of the car and being suspended at it distal end by a steel cable connected at or near the top of the hatch of the car. The hatch itself is held in a half open position by two supports, one at either side of the hatch, said supports resting with their lower ends on the bottom of the trunk area and gripping with their upper ends around the lateral edges of the hath of the car. Further, a tent cloth encloses the space defined by the bottom plate and the hatch.

A collapsed condition of the known camping device in which the camping device is carried outside the car on a conventional towing hook or an extension luggage carrier is hot disclosed.

US 3403935 A discloses a rather complicated, heavy and bulky camping device, even including a twin hull boat acting as a roof for the camping device. This camping device is carried on the roof of the car by carrier members at the front section and rear section of the roof or at the front section of the roof and the trunk area of the car. Further, a partly collapsible section of the camping device is connected to the rear bumper of the car by means of a ball and socket type hitch. This known camping device cannot be folded down into a package of limited dimensions in order to be carried on the towing hook.

In the following, the invention will be further elucidated with reference to the accompanying drawing of a few exemplary embodiments.
Fig. 1 schematically shows an example of a car with a platform mounted on the towing hook;
Fig. 2 schematically shows an example of a car with a foldable carrier mounted on the towing hook;
Fig. 3 schematically shows an example of a car with a carrier mounted on the towing hook, unfolded so as to form a camping accommodation.;
Fig. 4 schematically shows a variant of Fig. 3;
Figs. 5 and 6 show schematic examples of details of a camping device according to the invention;
Fig. 7 schematically illustrates another exemplary embodiment of a foldable carrier;
Fig. 8 schematically shows an example of a variant of the embodiment of Fig. 3 with extended floor plate; and
Figs. 9 to 12 schematically show a few examples of a camping device according to the invention with a camping accommodation reaching above the roof of the car.

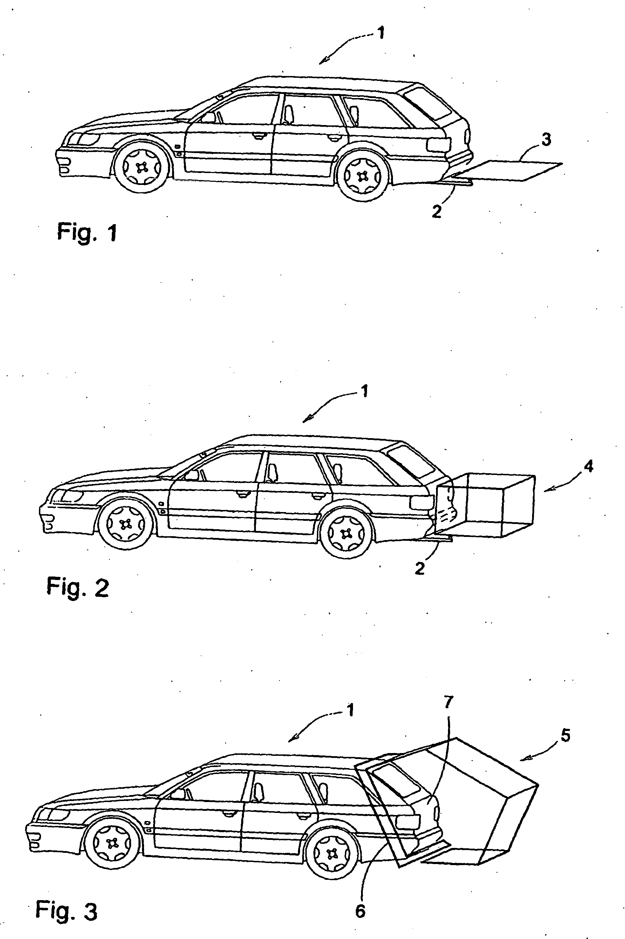

Fig. 1 schematically shows an example of a car, in this case a station wagon type, with a towing hook 2 and a carrier 3 known per se, fitted to the towing hook. The carrier has the shape of a platform and is preferably manufactured from light yet strong material, such as aluminum. As an alternative, extension luggage carriers (not shown) are known which, with the aid of one or more adapters, can be attached to the back of a car. Often, the adapters of such luggage carriers are fixedly attached to the car, while a platform or the like can be fastened to the adapter in an easily removable manner. Such extension luggage carriers are marketed by, for instance, Cate-Automobilzubehör.

According to the invention, instead of a platform, a box-shaped carrier 4 is used, which is of foldable design. An example is schematically shown in Fig. 2. Optionally, such a box-shaped carrier can also be fitted onto the platform.

Fig. 3 schematically shows an example of a camping accommodation 5 in unfolded condition. The camping accommodation shown is connected to the rear side of the car via a collar 6, extending around the tailgate or rear door 7. The collar 6 can, if desired, be designed as an inflatable sleeve. Advantageously, the construction can be designed such that the tailgate 7 can be opened when the camping accommodation is in operative condition. The interior of the car is then in open communication with the camping accommodation, which increases the options for use.

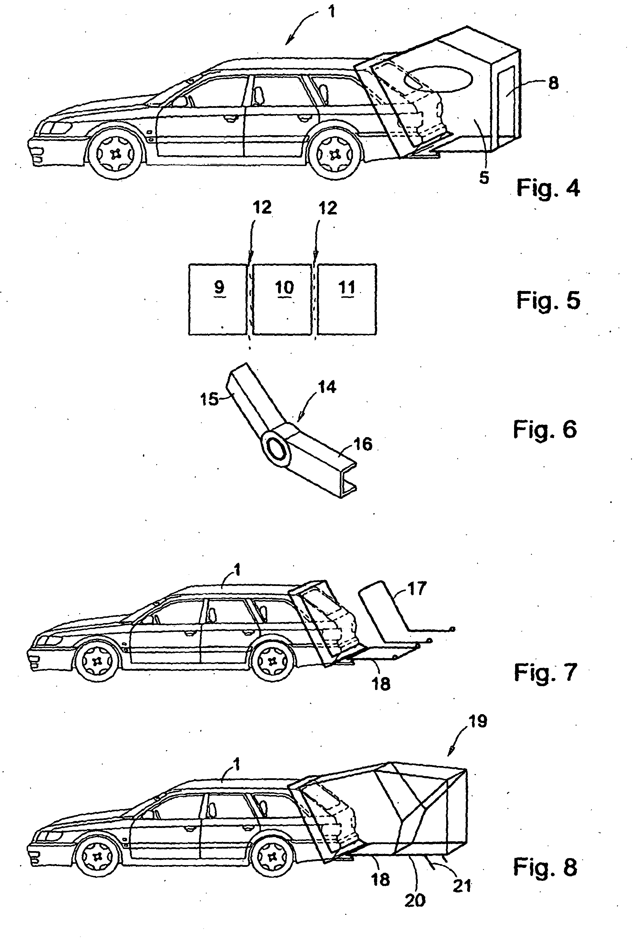

Fig. 4 shows a variant of the example of Fig. 3, the camping accommodation having a foldable entrance door 8, in this example situated at the rear side.

Fig. 5 schematically shows an example of a number of panels 9, 10, 11 which can be hingedly connected to each other at 12 and which, in some exemplary embodiments of a camping device according to the invention, can be used as wall, roof, floor or door panels or the like.

Fig. 6 schematically shows a hinge construction 14 for use in, for example, sandwich panels provided with a U-shaped edge profile 15, 16.

Fig. 7 schematically shows a variant in which the foldable construction comprises one or more tube frames 17, which are hingedly connected to the bottom panel 18 and/or each other and which support a tent cloth and/or are covered with tent cloth or the like.

Fig. 8 schematically shows an exemplary embodiment of a camping accommodation 19 lengthened rearwards with an additional floor part 20, folded backwards (relative to the car), bearing, via supports 21, on the ground. Preferably, such supports are of adjustable design.

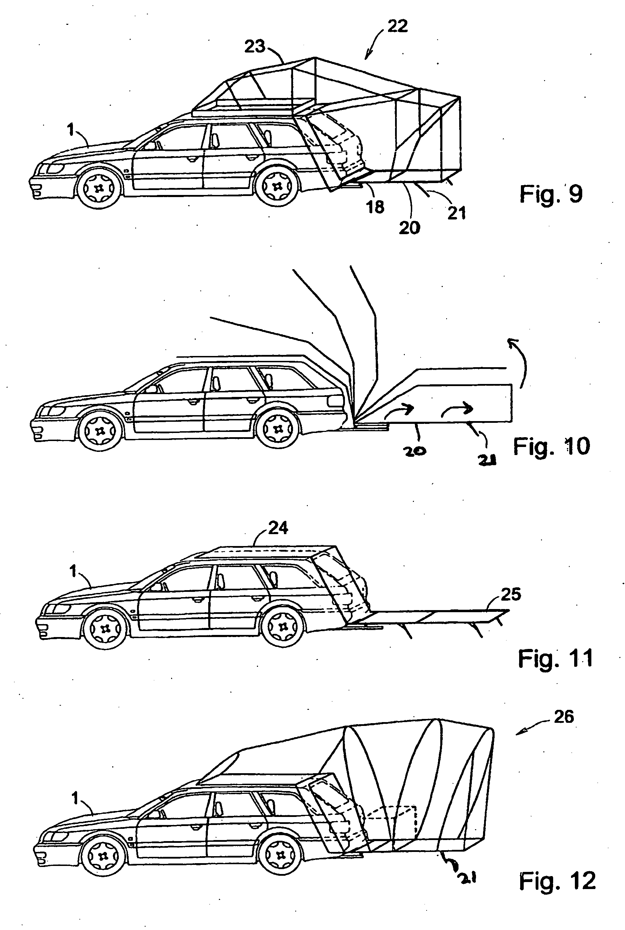

Fig. 9 schematically shows an example of a camping accommodation 22 according to the invention which, in the operative condition, also has a part reaching over the roof of the car. Here, optionally, use can be made of a roof rack already present, or of roof rails already present.

Fig. 10 schematically shows how a camping accommodation reaching in operative condition over the roof of the car is first unfolded and/or extended and then is swiveled partly over the roof of the car.

Fig. 11 schematically shows an example of a part of a camping accommodation according to the invention with a part 24 reaching over the roof of the car 1 and an additionally lengthened and supported floor part 25.

Fig. 12 finally, schematically shows an example of a camping accommodation 26 according to the invention with a lengthened floor part and an accommodation designed as a tent arranged thereon, which, in this example, again, reaches over the roof of the car.

The foldable and/or extendable construction can be realized in many manners evident to the skilled person. Further, in a manner comparable to that of a folding caravan, a device can be provided which, for instance, can comprise one or more sleeping places. Also, the foldable construction might comprise sanitary facilities, such as a chemical closet. In the foregoing, examples have been described in which the camping accommodation and the car are in connection with each other via a rear door or tailgate of the car. However, the camping accommodation can also be in communication with the interior of the car via a side door of the car or even a sliding roof, in addition or not in addition to a communication via a rear door or tailgate. Accordingly, "wall" of the car is also understood to include a wall other than the rear wall, for instance a side wall or an upper wall (roof) of the car.

## Claims

1. A camping device for use in combination with a car (1), said camping device comprising a carrier (3;4) mountable on a towing hook of the car or on an extension luggage carrier, mounted to the car wherein said carrier (3;4) is provided with a foldable construction (5;19;22;26) connected to the carrier (3;4), said foldable construction being foldable into a package of limited dimensions during driving, **characterised in that** said foldable construction in unfolded condition, in cooperation with at least one wall of a car (1), is able to form a camping accommodation, wherein a door or flap (7) present in said wall of the car (1) can be opened, so that the interior of the car is in open communication with the camping accommodation.

2. A camping device according to claim 1, **characterized in that** the foldable construction is provided with a collar (6) which can be sealingly connected around the back of the car (1).

3. A camping device according to claim 1 or 2, **characterized in that** the foldable construction (5; 19; 22; 26) comprises at least a number of rigid panels (9, 10, 11, 18, 20)

4. A camping device according to any one of the preceding claims, **characterized in that** the foldable construction (5; 19; 22; 26) comprises at least a number of panels substantially formed from a frame with cloth stretched thereon.

5. A camping device according to any one of the preceding claims, **characterized in that** the foldable construction comprises at least one rigid panel (9, 10, 11, 18, 20) which can be folded backwards into a horizontal position, which, together with the carrier (3; 4) forms a floor part (20) of the camping accommodation.

6. A camping device according to any one of the preceding claims, **characterized in that** the foldable construction (5; 19; 22; 26) has an operating in which it reaches at least partly over, the roof of the car (1).

7. A camping device according to any one of the preceding claims, **characterized in that** the foldable construction (5; 19; 22; 26) comprises a tent construction.

8. A camping device according to any one of the preceding claims, **characterized in that** the foldable construction (5; 19; 22; 26) comprises one or more elements of an interior.

9. A camping device according to claim 8, **characterized in that** the foldable construction (5; 19; 22; 26) comprises sanitary facilities.

10. A camping device according to any one of the preceding claims, **characterized in that** the foldable construction (5; 19; 22; 26) comprises one or more extendable panels (25).

## Patentansprüche

1. Campingeinrichtung zur Verwendung in Kombination mit einem Auto (1), wobei die Campingeinrichtung einen Träger (3;4) aufweist, der an einem Zughaken des Autos oder an einem am Auto montierten Anbau-Gepäckträger montierbar ist, wobei der Träger (3,4) mit einer mit dem Träger (3,4) verbundenen faltbaren Konstruktion (5;19;22;26) versehen ist, wobei die faltbare Konstruktion in eine Packung mit begrenzten Abmessungen während des Fahrens faltbar ist, **dadurch gekennzeichnet, dass** die faltbare Konstruktion in entfaltetem Zustand unter Zusammenwirken mit wenigstens einer Wand eines Autos (1) eine Camping-Unterkunft bilden kann, wobei eine Tür oder Klappe (7), die in der Wand des Autos (1) vorhanden ist, geöffnet werden kann, so dass das Innere des Autos sich in einer offenen Verbindung mit der Camping-Unterkunft befindet.

2. Campingeinrichtung nach Anspruch 1, **dadurch gekennzeichnet, dass** die faltbare Konstruktion mit einem Kragen (6) versehen ist, der um die Rückseite des Autos (1) abdichtend verbindbar ist.

3. Campingeinrichtung nach Anspruch 1 oder 2, **dadurch gekennzeichnet, dass** die faltbare Konstruktion (5;19;22;26) wenigstens eine Anzahl fester Platten (9;10; 11; 19; 20) umfasst.

4. Campingeinrichtung nach einer der vorhergehenden Ansprüche, **dadurch gekennzeichnet, dass** die faltbare Konstruktion (5;19;22;26) wenigstens eine Anzahl von Platten umfasst, die im Wesentlichen aus einem Rahmen mit daran gespanntem Stoff gebildet sind.

5. Campingeinrichtung nach einem der vorhergehenden Ansprüche, **dadurch gekennzeichnet, dass** die faltbare Konstruktion wenigstens eine feste Platte (9;10;11;18;30) umfasst, die nach hinten in eine horizontale Stellung faltbar ist, die zusammen mit dem Träger (3;4) einen Bodenteil (20) der Camping-Unterkunft bildet.

6. Campingeinrichtung nach einem der vorhergehenden Ansprüche, **dadurch gekennzeichnet, dass** die faltbare Konstruktion (5;19;22;26) eine Betriebs-Stellung aufweist, in der sie sich zumindest teilweise über das Dach des Autos (1) erstreckt.

7. Campingeinrichtung nach einem der vorhergehenden Ansprüche, **dadurch gekennzeichnet, dass** die faltbare Konstruktion (5;19;22;26) eine Zelt-Konstruktion umfasst.

8. Campingeinrichtung nach einem der vorhergehenden Ansprüche, **dadurch gekennzeichnet, dass** die faltbare Konstruktion (5;19;22;26) ein Innenelement oder mehrere Innenelemente umfasst.

9. Campingeinrichtung nach Anspruch 8, **dadurch gekennzeichnet, dass** die faltbare Konstruktion (5;19;22;26) Sanitäreinrichtungen umfasst.

10. Campingeinrichtung nach einem der vorhergehenden Ansprüche, **dadurch gekennzeichnet, dass** die faltbare Konstruktion (5;19;22;26) eine oder mehrere vergrößerbare Platten (25) aufweist.

## Revendications

1. Dispositif de camping destiné à être utilisé en coopération avec une voiture(1), ledit dispositif comportant un support (3, 4) pouvant être monté sur une boule de remorquage de la voiture ou sur une extension de porte bagage montée sur la voiture, ledit support (3, 4) étant pourvu d'une structure pliable (5, 19, 22, 26) reliée au support ladite structure pliable pouvant être repliée dans un emballage de dimensions limitées pendant le transport, **caractérisé en ce que** ladite structure pliable, en configuration dépliée, peut former un habitacle de camping en coopération avec au moins une paroi de la voiture (1), une porte ou hayon (7) présente dans ladite paroi de la voiture (1) pouvant être ouverte de façon que l'intérieur de la voiture soit en communication libre avec l'habitacle de camping.

2. Dispositif de camping selon la revendication 1, **caractérisé en ce que** la structure pliable comporte un cadre (6) qui peut être relié de façon étanche à l'arrière de la voiture.

3. la structure pliable (5, 19, 22, 26) comporte au moins plusieurs panneaux rigides (9, 10, 11, 18, 20).

4. Dispositif de camping selon l'une quelconque des revendications précédentes, **caractérisé en ce que** la structure pliable (5, 19, 22, 26) comporte au moins plusieurs panneaux formés essentiellement à partie d'un cadre sur lequel est tendu de la toile.

5. Dispositif de camping selon l'une quelconque des revendications précédentes, **caractérisé en ce que** la structure pliable comporte au moins un panneau rigide (9, 10, 11, 18, 20), pouvant être replié vers l'arrière dans une position horizontale, qui forme, avec le support (3, 4) une partie de plancher (20) de l'habitacle de camping.

6. Dispositif de camping selon l'une quelconque des revendications précédentes, **caractérisé en ce que** la structure pliable (5, 19, 22, 26) a une position active dans laquelle elle atteint au moins partiellement le dessus du toit (1).

7. Dispositif de camping selon l'une quelconque des revendications précédentes, **caractérisé en ce que** la structure pliable (5, 19, 22, 26) réalisée comme une tente.

8. Dispositif de camping selon l'une quelconque des revendications précédentes, **caractérisé en ce que** la structure pliable (5, 19, 22, 26) comporte un élément d'intérieur ou plus.

9. Dispositif de camping selon la revendication 8, **caractérisé en ce que** la structure pliable (5, 19, 22, 26) comporte une installation sanitaire.

10. Dispositif de camping selon l'une quelconque des revendications précédentes, **caractérisé en ce que** la structure pliable (5, 19, 22, 26) comporte un panneau d'extension ou plus.
